# FASCICULE DE BREVET EUROPEEN

(11) **EP 1 590 214 B1**
(45) Date de publication et mention de la délivrance du brevet: **04.12.2019**
(21) Numéro de dépôt: 04707911.6
(22) Date de dépôt: 04.02.2004
(51) Int. Cl.: B60S 1/40

(54) **CONNECTEUR RELIANT UN BRAS D'ESSUIE-GLACE A UN BALAI D'ESSUYAGE**
EINEN WISCHERARM MIT EINEM WISCHBLATT VERBINDENDER VERBINDER
CONNECTOR LINKING A WIPER ARM TO A WIPER BLADE

(30) Priorité: 04.02.2003 FR 0301292
(43) Date de publication de la demande: 02.11.2005
(73) Titulaire: Valeo Systèmes d'Essuyage, 78322 Le Mesnil Saint Denis (FR)
(72) Inventeur: THIENARD, Jean-Claude, F-27140 Gisors (FR)
(86) Numéro de dépôt international: PCT/EP2004/001007
(87) Numéro de publication internationale: WO 2004/069618

(56) Documents cités:
- EP-A- 0 841 229
- EP-A1- 1 572 509
- WO-A-01/15945
- DE-A- 19 812 716
- FR-A- 2 372 719
- FR-A- 2 692 537
- US-A- 5 289 608
- US-A- 5 392 487

## Description

L'invention concerne une pièce de raccordement, aussi appelée connecteur, utilisée pour relier l'extrémité d'un bras d'essuie-glace à un élément d'une structure de support de la lame d'essuyage d'un balai d'essuyage.

L'invention concerne plus particulièrement un connecteur pour relier une extrémité d'un bras d'essuie-glace à un premier axe transversal d'articulation appartenant à un élément de structure d'un balai d'essuyage, le connecteur étant apte à être reçu au moins en partie dans le fond de l'extrémité en forme de crochet en U d'un bras qui appartient à une première catégorie, le connecteur comportant
- un premier logement dans lequel le premier axe d'articulation peut être introduit,
- un deuxième logement destiné à recevoir un deuxième axe transversal, qui appartient à une deuxième catégorie de bras pouvant avoir au moins une première taille et qui s'étend transversalement depuis un bord latéral de l'extrémité du bras, ce deuxième logement étant délimité en partie par une première languette inférieure , déformable élastiquement qui s'étend globalement longitudinalement, dont une première extrémité longitudinale est fixée au connecteur et qui est apte à s'escamoter pour permettre l'introduction du deuxième axe, et provoquer le verrouillage transversal du deuxième axe en position montée dans le deuxième logement.

L'augmentation des types et formes des véhicules automobiles actuels provoque une augmentation des catégories de bras et des dimensions des bras pour chaque catégorie.

La languette inférieure permet, en utilisant un même connecteur, de relier le balai d'essuyage à différentes catégories de bras d'essuyage, parmi lesquelles une première catégorie dans laquelle l'extrémité du bras est en forme de U, et une deuxième catégorie dans laquelle l'extrémité du bras porte un axe transversal.

Par l'intermédiaire de moyens d'adaptation, le connecteur est particulièrement adapté pour des bras de la première catégorie qui peuvent avoir de nombreuses dimensions. Cependant, il n'est pas adapté à recevoir des extrémités de bras de la deuxième catégorie qui ont plusieurs dimensions.

En effet, selon une conception connue, décrite dans le document WO-A-01.15946, la languette inférieure est apte à se déformer élastiquement pour accueillir l'axe transversal de l'extrémité du bras. Ainsi, pour que le connecteur soit apte à recevoir un deuxième axe transversal d'une taille supérieure, c'est-à-dire de diamètre plus important, il faut que la languette inférieure soit conçue pour se déformer suivant une plus grande amplitude.

Ceci implique que, lorsque le connecteur reçoit un axe d'une première taille qui est la plus petite, l'amplitude de la déformation de la languette inférieure est faible. Ainsi, l'effort de rappel élastique permettant à la languette inférieure de se maintenir dans la gorge périphérique de l'axe est plus faible que celui provoqué lorsque le connecteur reçoit un axe d'une deuxième dimension, supérieure à la première.

Par ailleurs, du fait des faibles dimensions d'un axe de la première taille, la profondeur de la gorge qui reçoit la languette inférieure est relativement faible, ce qui implique une surface d'appui de la languette sur les parois de la gorge elle aussi réduite.

Il s'en suit que le blocage réalisé par la languette, inférieure, lorsque le connecteur reçoit un axe de la première taille, est peu efficace, en comparaison avec le blocage réalisé lorsque le connecteur reçoit un axe de la deuxième taille pour lequel l'effort de rappel élastique et la surface d'appui de la languette sur les parois de la gorge sont supérieurs.

C'est pourquoi il est souvent proposé d'utiliser un connecteur adapté à chaque taille ou dimension de l'axe.

Puisque les balais d'essuyage sont des éléments qui s'usent rapidement, il est nécessaire à l'utilisateur de les remplacer régulièrement. Pour cela, il est possible de trouver dans le commerce des balais d'essuyage neufs accompagnés de connecteurs. Comme les constructeurs ne peuvent connaître ni la catégorie, ni la taille du bras d'essuie-glace du véhicule du conducteur, ceux-ci sont alors obligés de rassembler dans un même emballage plusieurs connecteurs qui permettent de relier un balai à l'ensemble des catégories et tailles des bras.

Parmi les connecteurs fournis dans l'emballage, un seul sera utilisé pour relier le balai d'essuyage au bras d'essuyage, les autres, inutiles, seront jetés au rebut.

Ainsi, les constructeurs sont certains de commercialiser des connecteurs dont une partie sera automatiquement jetée, il en résulte donc une perte de la matière première commercialisée, qui aurait pu être utilisée pour la fabrication d'autres connecteurs.

Pour éviter cela, l'invention propose un connecteur qui permette, à lui seul, de relier un balai d'essuyage à une extrémité d'un bras d'essuyage, parmi plusieurs catégories de bras, et plusieurs tailles de bras.

Le document EP1572509 A1 appartenant à la catégorie des documents selon l'article 54(3) CBE décrit un connecteur ayant trois types différents de logements qui permettent de relier indifféremment le balai d'essuyage à un bras appartenant à trois catégories de bras différents.

Le document DE19812716 A1 décrit un connecteur apte à être reçu dans deux types différents de bras d'essuie-glace.

Dans ce but, l'invention propose un connecteur selon l'objet de la revendication 1.

Selon d'autres caractéristiques de l'invention :
- Le connecteur comporte des moyens d'adaptation de sorte qu'il soit apte à être reçu dans le fond d'extrémités de bras de la première catégorie et de tailles différentes ;
- les moyens d'adaptation comportent des formes agencées en relief sur des faces longitudinales internes du connecteur en vis-à-vis de joues latérales du connecteur ;
- la languette supérieure est de largeur transversale complémentaire de la largeur de la gorge annulaire du deuxième axe, de manière à être reçue sans jeu dans la gorge ;
- la languette supérieure est reliée à chacune des joues du connecteur par l'intermédiaire de films de matière dont les dimensions sont déterminées de manière que l'introduction d'un deuxième axe de la première taille ne provoque pas la rupture des films de matière ;
- l'extrémité longitudinale arrière de la languette supérieure est fixée au tronçon supérieur arrière ;
- l'introduction d'un bras de la troisième catégorie dans le troisième logement provoque la rupture des films de matière ;
- le tronçon supérieur arrière comporte un orifice vertical qui est apte à recevoir un ergot de l'extrémité d'un bras appartenant à la troisième catégorie de bras, qui fait saillie vers le haut par rapport à la face supérieure de l'extrémité du bras, pour réaliser le blocage longitudinal de l'extrémité du bras, en position montée dans le troisième logement ;
- une portion de la languette inférieure est recourbée vers la bas de manière que, pour au moins une taille d'un bras appartenant à la première catégorie de bras, la languette inférieure est déformée élastiquement vers le haut de manière à exercer un effort globalement vertical vers le bas sur la face supérieure d'un deuxième tronçon inférieur horizontal de l'extrémité du bras ;
- la languette supérieure comporte deux pions latéraux agencés de part et d'autre de l'extrémité longitudinale avant de la languette supérieure, qui s'étendent transversalement vers l'extérieur du connecteur, et qui traversent un orifice de la joue latérale associée, de manière que l'extrémité libre de chaque pion affleure avec la face verticale externe de la joue associée ;
- lorsqu'un bras appartenant à la troisième catégorie de bras est en position montée dans le troisième logement, les pions latéraux sont en butée verticale contre un bord supérieur de l'orifice de la joue associé ;
- chaque bossage est cintré de manière que la courbure de sa face supérieure soit globalement complémentaire à la paroi cylindrique externe d'un deuxième axe de la deuxième taille ;
- l'extrémité avant libre de la languette supérieure est recourbée vers le bas, de manière que lorsque l'extrémité d'un bras appartenant à la troisième catégorie de bras est introduite dans le troisième logement, la languette supérieure est déformée élastiquement vers le haut, et l'extrémité avant libre de la languette supérieure exerce un effort de rappel orienté globalement vers le bas sur la face supérieure de l'extrémité du bras ;
- le tronçon d'extrémité avant de chaque joue, qui s'étend longitudinalement en porte-à-faux en avant du corps, est déformable élastiquement et comporte, sur sa face longitudinale verticale interne, une butée formant rampe, de manière à s'escamoter lors de l'introduction de l'extrémité d'un bras appartenant à la première catégorie de bras, et de manière à réaliser le blocage en position montée du crochet en U autour du corps du connecteur ;
- la butée formant rampe s'étend sur une portion supérieure du tronçon d'extrémité avant de la joue associée et en ce qu'une portion inférieure du tronçon d'extrémité avant comporte une ouverture d'introduction du crochet en U ;
- les formes en relief comportent une nervure agencée sur la face longitudinale verticale interne de chaque joue du connecteur, qui s'étend longitudinalement au-dessus de la face supérieure du tronçon supérieur arrière du corps, pour le positionnement d'une extrémité de bras appartenant à la première catégorie de bras ;
- la face inférieure de la languette inférieure comporte des nervures de positionnement vertical et/ou transversal d'un bras de la première catégorie d'au moins une taille ;
- chaque nervure de positionnement s'étend globalement verticalement vers le bas le long d'un bord latéral de la face inférieure de la languette inférieure ;
- les pions latéraux comportent chacun une surface d'appui contre la surface cylindrique externe d'un deuxième axe de la deuxième taille qui est complémentaire à cette paroi cylindrique externe ;
- la courbure d'un bord supérieur de l'orifice d'une joue est sensiblement identique à la courbure de la paroi cylindrique externe d'un deuxième axe de la deuxième taille ;
- chaque joue comporte une rainure qui s'étend verticalement vers le bas depuis son bord supérieur et qui est complémentaire à un élément de manœuvre du connecteur ;
- la rainure forme globalement un T inversé dont le bord inférieur de la branche horizontale s'étend verticalement au-dessus de la face supérieure de l'élément avant du corps du connecteur ;
- les nervures s'étendent longitudinalement vers l'avant de manière à s'étendre jusqu'à l'extrémité avant du tronçon avant du corps du connecteur ;
- le connecteur comporte une traverse qui relie les extrémités inférieures arrières de chaque joue.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective éclatée d'un essuie-glace représentant un balai d'essuyage et les différentes catégories de bras qui peuvent être reliées au balai d'essuyage par l'intermédiaire d'un connecteur conforme à l'invention ;
- la figure 2 est une représentation schématique en perspective du connecteur conforme à l'invention ;
- la figure 3 est une vue de côté du connecteur représenté à la figure 2 ;
- la figure 4 est une vue en section longitudinale du connecteur représenté à la figure 3 ;
- la figure 5 est une vue en section transversale du connecteur représenté en position montée dans le balai ;
- la figure 6 est une représentation schématique en perspective de dessus du connecteur représenté à la figure 2 ;
- la figure 7 est un détail à plus grande échelle du connecteur représenté à la figure 6, montrant l'extrémité avant de la languette supérieure ;
- la figure 8 est un détail à plus grande échelle en perspective de dessous de la languette inférieure ;
- la figure 9 est un détail à plus grande échelle en perspective de côté de l'extrémité avant de la languette supérieure, montrant une variante de réalisation des pions latéraux ;
- la figure 10 est un détail à plus grande échelle en perspective du tronçon avant du corps du connecteur, et montrant une variante de réalisation de la rainure en T ;

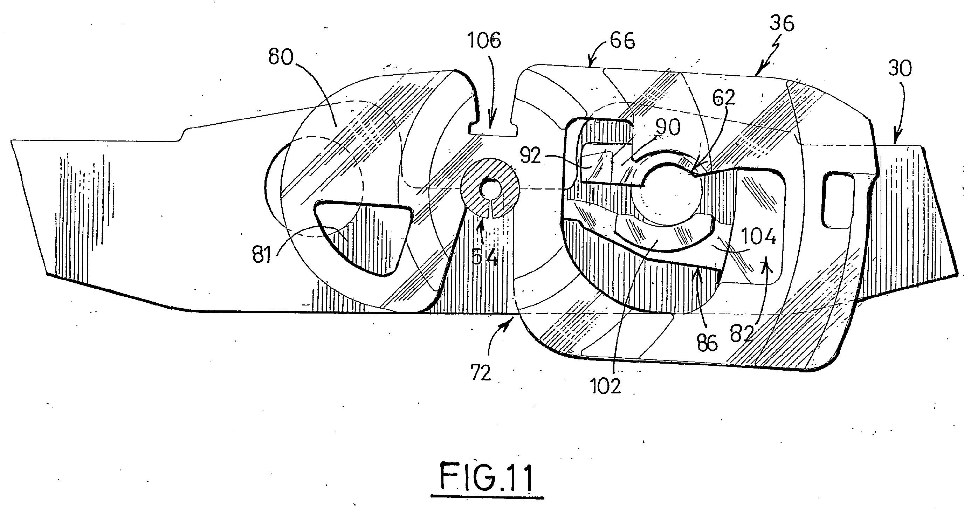

- la figure 11 est une vue de côté avec arrachement du connecteur en position montée dans le balai, dans laquelle le connecteur relie le balai à un bras de la troisième catégorie, et de la première taille ;
- la figure 12 est une vue similaire à celle de la figure 11, dans laquelle le connecteur relie le balai à un bras de la troisième catégorie, et de la deuxième taille ;
- la figure 13 est une vue similaire à celle de la figure 11, représentant une étape pour le démontage d'un bras de la troisième catégorie ;
- la figure 14 est une vue en section transversale du connecteur qui porte un bras de la troisième catégorie ;
- la figure 15 est une vue en section longitudinale du connecteur, conformément à un autre mode de réalisation de l'invention ;
- la figure 16 est une vue similaire à celle de la figure 15, représentante introduction d'un bras de la troisième catégorie dans le troisième logement ;
- la figure 17 est une vue similaire à celle de la figure 12, représentant un connecteur conforme à un autre mode de réalisation de l'invention selon lequel le troisième logement est incliné par rapport à l'axe principal du connecteur ;
- la figure 18 est une vue similaire à celle de la figure 17, dans laquelle un bras de la troisième catégorie est en position montée dans le troisième logement ;
- la figure 19 est une vue en coupe longitudinale du connecteur qui porte un bras de la première catégorie ;
- la figure 20 est un détail en section longitudinale horizontale du connecteur et du bras représentés à la figure 19, montrant la fonction de blocage longitudinal du crochet en plus réalisée par la butée en V.

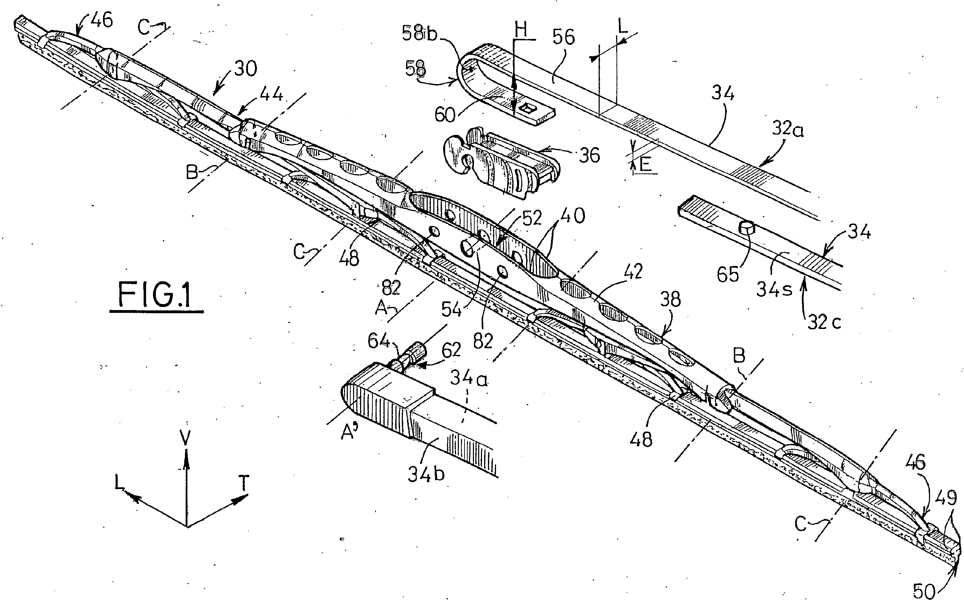

Pour la description de l'invention, on adoptera à titre non limitatif les orientations verticale, longitudinale et transversale selon le repère V, L, T indiqué à la figure 1.

On adoptera aussi l'orientation d'arrière en avant comme étant la direction longitudinale et de droite à gauche en se reportant à la figure 1.

Dans la description qui va suivre, des éléments identiques, similaires ou analogues seront désignés par les mêmes chiffres de référence.

On a représenté à la figure 1 un balai d'essuyage 30 destiné à être monté à rotation autour d'un axe transversal A à l'extrémité longitudinale avant 34 d'un bras d'essuie-glace 32a, 32b, 32c par l'intermédiaire d'un connecteur d'adaptation 36.

Le balai d'essuyage 30 comporte un étrier principal 38 muni de deux ailes longitudinales parallèles 40 reliées par un dos supérieur transversal 42.

A chacune de ses deux extrémités longitudinales, l'étrier principal 38 porte à rotation, autour d'axes transversaux B, des palonniers 44 qui portent eux-mêmes à leurs extrémités des palonniers secondaires 46 montés à rotation autour d'axes transversaux C.

Chacun des palonniers secondaires 46 comporte à ses extrémités longitudinales des griffes d'accrochage 48 sur des vertèbres métalliques 49 de support d'une raclette d'essuyage 50 réalisée en matériau élastomère souple.

L'étrier principal 38, les palonniers 44 et les palonniers secondaires 46 forment une structure articulée qui est déformable dans un plan longitudinal sensiblement perpendiculaire au plan général de la vitre à essuyer (non représentée) et qui permet, à l'aide des vertèbres 49, de plaquer la raclette 50 sur toute sa longueur contre la vitre tout en répartissant de manière homogène la pression de contact entre la raclette 50 et la vitre sur toute la longueur du balai 30.

L'étrier principal 38 du balai 30 comporte, dans sa partie centrale, une ouverture supérieure 52 formée dans son dos supérieur 42 et dans laquelle est agencée une tige transversale 54 reliant les deux ailes 40 et formant un premier axe transversal A d'articulation du balai 30 par rapport au bras d'essuie-glace 32a, 32b, 32c.

On a aussi représenté à la figure 1 les extrémités libres 34 de trois bras d'essuie-glace différents 32a, 32b, 32c représentant chacun une catégorie de bras d'essuie-glace existant sur les véhicules automobiles actuels, qui sont chacun apte à recevoir le balai d'essuyage 30 par l'intermédiaire d'un même connecteur 36.

Une première catégorie de bras 32a regroupe les bras dont l'extrémité a la forme d'un crochet en U, et qui comporte une branche supérieure horizontale 56 qui s'étend globalement horizontalement vers l'avant, une branche intermédiaire recourbée en C 58 dont l'extrémité supérieure est reliée à l'extrémité longitudinale avant de la branche supérieure 56, et une branche inférieure horizontale 60 qui s'étend longitudinalement vers l'arrière depuis l'extrémité inférieure de la branche intermédiaire 58.

Les bras 32a de cette première catégorie peuvent avoir plusieurs tailles, chacune définie par la largeur L et l'épaisseur E de chaque branche. Dans la description qui va suivre, on se référencera à trois tailles différentes de bras, pour chacune desquelles le groupe (L ; E ; H) formé par les valeurs en mm de la largeur L, de l'épaisseur E et de la hauteur du crochet H a pour valeurs (9 ; 3 ; 6.7), (9 ; 4 ; 10,7) et (8 ; 3 ; 6.7) respectivement.

Une deuxième catégorie de bras 32b regroupe les bras dont l'extrémité 34 s'étend longitudinalement vers l'avant et qui porte sur une de ses faces latérales 34a un axe transversal 62 comportant sur sa paroi cylindrique extérieure une gorge 64 périphérique de section rectangulaire.

Les bras 32b de cette première catégorie peuvent avoir une première et une deuxième tailles, correspondant chacune à un diamètre extérieur de l'axe 62. Dans la description qui va suivre, le bras 32b ayant la première taille sera celui pour laquelle le diamètre extérieur de l'axe 62 est le plus faible, c'est-à-dire ici 4,8 mm, et le bras 32b ayant la deuxième taille sera celui pour laquelle le diamètre extérieur de l'axe 62 est le plus élevé, c'est-à-dire ici 6,35 mm.

Enfin, une troisième catégorie de bras 32c regroupe les bras dont l'extrémité 34 consiste en un tronçon longitudinal horizontal unique de section transversale rectangulaire, qui porte sur sa face supérieure 34s un ergot 65 faisant saillie vers le haut.

Le connecteur 36 permet de relier indifféremment le balai d'essuyage 30 à un bras 32a, 32b, 32c appartenant à chaque catégorie de bras et ayant l'une des tailles précitées.

Selon un mode de réalisation connu, le connecteur 36 est réalisé en un seul élément par moulage, généralement en matière plastique.

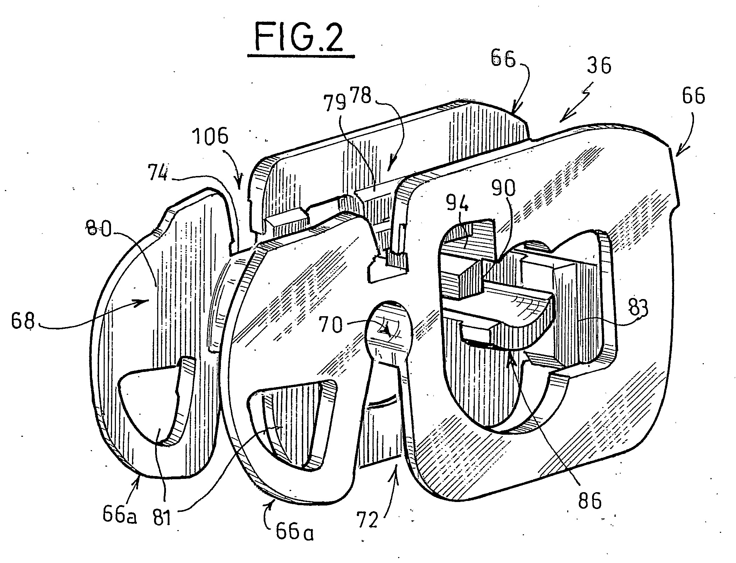

Comme on peut le voir plus en détail aux figures 2 à 4, le connecteur comporte deux joues latérales verticales parallèles 66 qui sont destinées à être reçues sans jeu, au travers de l'ouverture 52 du dos 42 de l'étrier principal 38, entre les deux ailes 40 de l'étrier principal 38, de manière à positionner transversalement le connecteur 36 par rapport à l'étrier principal 38 du balai d'essuyage 30.

Les deux joues latérales 66 sont reliées entre elles par un corps transversal 68 qui délimite un premier logement cylindrique 70 complémentaire du premier axe d'articulation 54, et à l'intérieur duquel la tige transversale 54 délimitant le premier axe transversal A d'articulation peut être introduite radialement.

Pour cela, le premier logement cylindrique 70 est ouvert le long de sa génératrice transversale inférieure, et les deux joues 66 comportent chacune une ouverture 72 qui s'étend verticalement vers le bas depuis le premier logement 70 jusqu'au bord inférieur 66b de la joue 66 associée. La dimension longitudinale du premier logement 70 est déterminée de manière que la distance entre ses deux bords longitudinaux 70a soit inférieure au diamètre extérieur du premier axe d'articulation 54, l'introduction du premier axe d'articulation 54 dans le premier logement 70 se faisant par déformation élastique du corps 68.

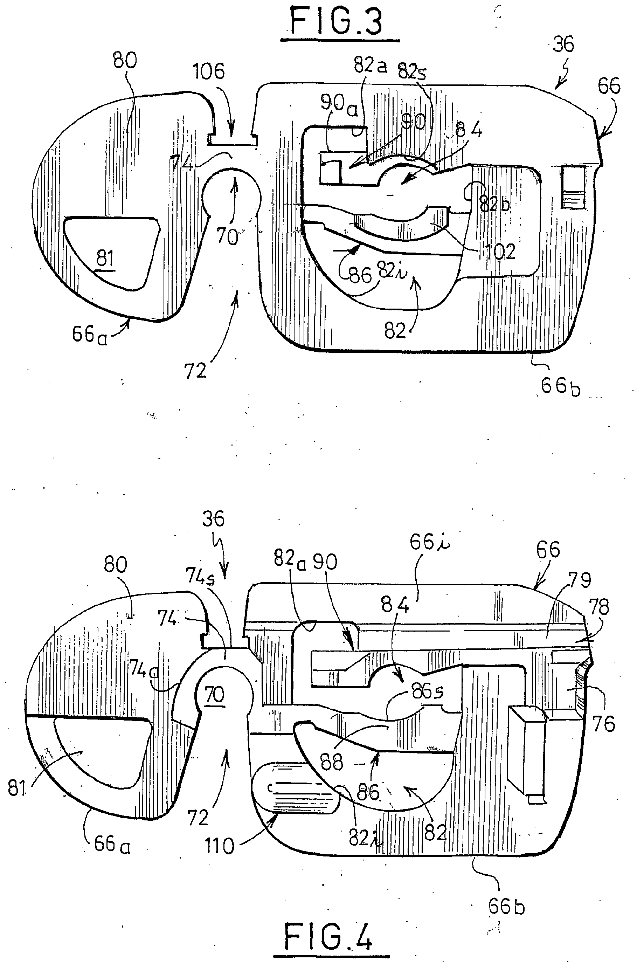

Comme on peut le voir plus en détail notamment à la figure 4, le corps 68 comporte un premier tronçon avant 74 qui délimite le premier logement 54, et un deuxième tronçon supérieur arrière 76 qui s'étend longitudinalement horizontalement en arrière du tronçon avant 74 de manière que sa face supérieure 76s soit agencée verticalement globalement à la même hauteur que la face supérieure 74s du tronçon avant 74.

Pour relier le balai d'essuyage 30 à un bras 32a appartenant à la première catégorie de bras, le corps 68 du connecteur 36 est apte à être reçu dans le fond de l'extrémité du bras 32a en forme de crochet en U, les deux joues 66 du connecteur 36 étant disposées transversalement de part et d'autre de l'extrémité 34 du bras 32a.

Pour cela, la face cylindrique avant 74a du tronçon avant 74 est convexe et est conformée de manière que lorsque le connecteur 36 est reçu dans l'extrémité 34 du bras 32a, au moins une génératrice transversale de la face cylindrique avant 74a est en contact avec la face cylindrique arrière concave 58b de la branche intermédiaire 58 du bras 32a.

De plus, des formes 78 sont agencées en relief sur les faces longitudinales verticales internes 66i en vis-à-vis des joues latérales 66 pour positionner verticalement et transversalement le connecteur 36 par rapport à l'extrémité 34 du bras 32a.

Les formes en relief 78 comportent une nervure 79 qui s'étend longitudinalement au-dessus de la face supérieure 76s du tronçon arrière du corps, et en arrière de la face supérieure 74s du tronçon avant 74 du corps 68.

Les deux nervures 79 sont de section rectangulaire, et leurs dimensions sont déterminées de manière que la distance entre leurs faces longitudinales verticales en vis-à-vis soit égale à la largeur L du bras 32a de la première catégorie la plus faible, c'est à dire ici 8mm.

Ainsi, lorsque le crochet en U est en position montée autour du corps 68 du connecteur 36, la branche supérieure 56 du crochet en U s'appuie sur les faces longitudinales horizontales supérieures des deux nervures 79 lorsque la largeur L du bras 32a est la plus élevée, et la branche supérieure 56 du crochet en U s'appuie sur la face supérieure 76s du tronçon arrière lorsque la largeur L du bras est la plus faible.

Les formes en relief 78 comportent aussi, comme on l'a représenté à la figure 4, au moins un bossage 110 qui permet de réaliser, en fonction de la taille du bras 32a, le positionnement vertical ou transversal de la branche inférieure 60 du crochet en U.

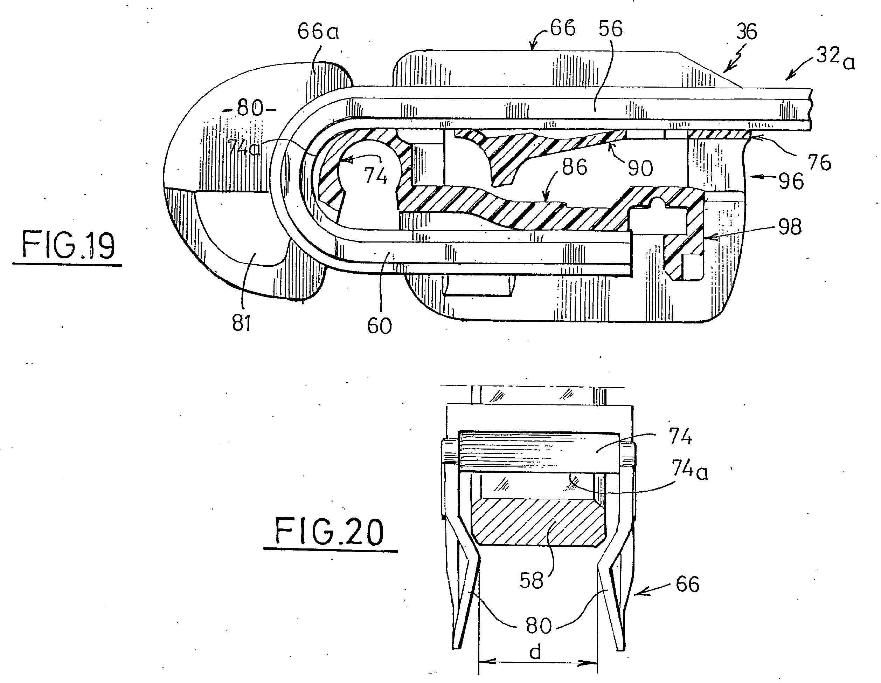

Comme on l'a représenté aux figures 19 et 20, pour réaliser le blocage du crochet en U en position montée autour du corps 68 du connecteur 36, chaque joue 66 s'étend longitudinalement en avant du corps 68 et elle comporte, sur sa face longitudinale verticale interne 66i, une butée 80 formant rampe dont les dimensions sont déterminées de manière que la distance "d" séparant l'extrémité interne des deux rampes 80 soit inférieure à la largeur L du bras 32a la plus faible.

Chaque butée 80 consiste en une portion du tronçon d'extrémité avant 66a de la joue 66 qui s'étend en porte-à-faux en avant du corps 68, qui est déformée vers l'intérieur du connecteur 36, à la manière d'un "V". Ainsi, la butée 80 conserve une épaisseur identique à celle de la joue 66 associée. Ceci est un avantage important lorsque le connecteur 36 est réalisé par moulage car la butée 80 ne comporte aucune surépaisseur qui risquerait de nuire à sa solidité.

Par ailleurs, la butée 80 s'étend sur la partie supérieure du tronçon avant 66a de la joue 66 associée, et la partie inférieure du tronçon avant 66a de la joue 66 comporte un évidement 81.

Grâce à cet évidement 81, lors de l'introduction du crochet en U autour du corps 68, la branche inférieure 60 du crochet en U ne vient pas en contact avec les butées 80. Ceci permet de réaliser un positionnement vertical du crochet en U par rapport au corps 68 du connecteur 36, avant l'introduction définitive du crochet en U autour du corps 68 du connecteur 36, sans que l'utilisateur n'ait à réaliser de manœuvres complexes.

Le tronçon d'extrémité avant 66a de chaque joue 66 qui s'étend en porte-à-faux en avant du corps 68 est déformable élastiquement, de manière que lors de l'introduction du crochet en U autour du corps 68 du connecteur 36, les tronçons avant 66a des deux joues 66 se déforment élastiquement en s'écartant l'un de l'autre, et lorsque le crochet en U est en position montée autour du corps 68 du connecteur 36, les tronçons avant 66a des deux joues 66 reviennent élastiquement dans leur forme d'origine.

Ainsi, les butées formant rampe 80 réalisent le blocage longitudinal du crochet en U en position montée autour du corps 68 du connecteur 36.

Aussi, les butées formant rampe 80 sont agencées longitudinalement sur les faces internes 66i des joues 66 de manière que lorsque le crochet en U est en position montée autour du corps 68 du connecteur 36, la face avant 58a de la branche intermédiaire 58 courbe du crochet en U s'appuie contre la face arrière 80b de chaque butée 80, quelle que soit la taille du bras 32a.

Lorsqu'un bras 32b appartenant à la deuxième catégorie de bras est relié au balai d'essuyage 30, son axe transversal 62, que l'on appellera par la suite deuxième axe transversal, traverse une ouverture 82, réalisée dans chaque aile longitudinale 40 de l'étrier principal 38, la face latérale 34a du bras 32b qui porte le deuxième axe d'articulation 62 venant en butée contre la face longitudinale verticale en vis-à-vis 40a d'une aile 40 de l'étrier 38.

Ainsi, le balai d'essuyage 30 est articulé par rapport au bras 32b autour d'un deuxième axe A' transversal défini par le deuxième axe 62 du bras 32b. Le connecteur 36 a alors uniquement pour fonction de verrouiller transversalement le deuxième axe 62 par rapport au balai d'essuyage 30.

Comme on peut le voir notamment aux figures 2 à 4, le corps 68 du connecteur 36 délimite un deuxième logement 84 d'axe transversal à l'intérieur duquel le deuxième axe 62 peut être introduit transversalement. Le deuxième logement 84 du corps 68 est délimité en partie par la face inférieure 76i du tronçon supérieur arrière 76 du corps 68 qui comporte une portion concave 85, et est aussi délimité en partie par une languette inférieure 86 qui s'étend longitudinalement vers l'arrière depuis le tronçon avant 74 du corps 68, en vis-à-vis du tronçon supérieur arrière 76 du corps 36, dont la face supérieure 86s comporte une portion concave 88 en vis-à-vis de la portion concave 85 du tronçon supérieur arrière 76.

La languette inférieure 86 est déformable élastiquement de manière à s'escamoter pour permettre l'introduction du deuxième axe 62 dans le deuxième logement 84, et lorsque le deuxième axe 62 est en position montée dans le deuxième logement 84, elle est apte à exercer un effort de blocage qui tend à appuyer le deuxième axe 62 contre la face inférieure 76i du tronçon supérieur arrière 76 du corps 68.

Pour réaliser le verrouillage transversal du deuxième axe 62 par rapport au balai d'essuyage 30, le connecteur 36 comporte un élément de verrouillage qui est apte à être reçu en partie dans la gorge périphérique 64 du deuxième axe 62 lorsque celui-ci est en position montée dans le deuxième logement.

Conformément à l'invention, comme représenté notamment aux figures 2 à 4, l'élément de verrouillage consiste en une languette supérieure 90 qui est elle aussi déformable élastiquement et qui s'étend longitudinalement vers l'avant depuis l'extrémité longitudinale avant du tronçon supérieur arrière 76 du corps 68 du connecteur 36, et selon un mode de réalisation préféré, l'extrémité longitudinale avant 90a de la languette supérieure 90 est agencée longitudinalement en arrière du tronçon avant 74 du corps 36.

La languette supérieure 90 est déformable élastiquement de manière à s'escamoter vers le haut pour permettre l'introduction d'un deuxième axe 62 et de manière à se loger sans jeu dans la gorge périphérique 64 du deuxième axe 62 pour réaliser le blocage transversal du deuxième axe 62, en association avec la languette inférieure 86.

Pour cela, la largeur transversale de la languette supérieure 90 est complémentaire de la largeur de la gorge annulaire 64 du deuxième axe 62.

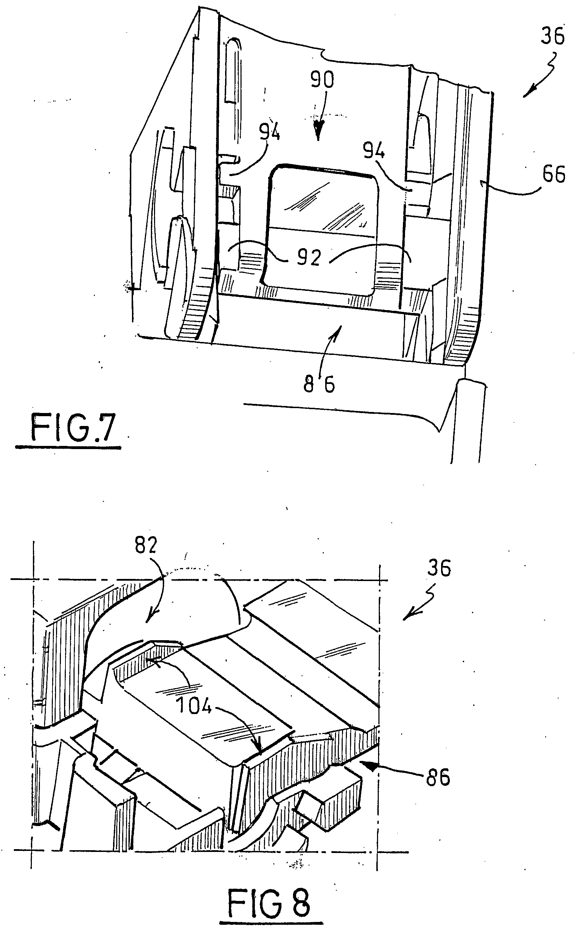

De plus, comme on l'a représenté aux figures 3 et 7, pour limiter la déformation de la languette supérieure 90 dans un plan horizontal, l'extrémité longitudinale avant 90a de la languette supérieure 90 comporte deux pions latéraux 92 agencés de part et d'autre de la languette supérieure 90 et qui s'étendent transversalement vers l'extérieur du connecteur 36 en traversant une ouverture 82 associé de chaque joue 66 du connecteur 36 de manière que l'extrémité transversale libre de chaque pion latéral 92 affleure avec la face verticale longitudinale externe 66e de la joue 66 associée.

Ainsi, lorsque le connecteur est en position montée au travers de l'ouverture 52 du dos 42 de l'étrier principal 38 du balai d'essuyage 30, l'extrémité libre de chaque pion latéral 92 est en butée contre la face longitudinale verticale interne d'une aile 40 de l'étrier principal 42 du balai d'essuyage 30, réalisant ainsi un blocage transversal de la languette supérieure 90.

Lors de l'utilisation de l'essuie-glace, il se produit des vibrations qui sont transmises au connecteur 36 et qui ont tendance à faire osciller la languette inférieure 86 et la languette supérieure 90.

Du fait des faibles dimensions d'un deuxième axe 62 de la première taille, la profondeur de la gorge 64 est relativement faible.

Ainsi, les oscillations de la languette supérieure 90 peuvent aboutir à ce qu'elle sorte de la gorge 64 du deuxième axe 62, au moins temporairement, le deuxième axe n'étant alors plus verrouillé transversalement, ce qui, à l'usage, peut provoquer une désolidarisation du balai 30 d'avec le bras 32b.

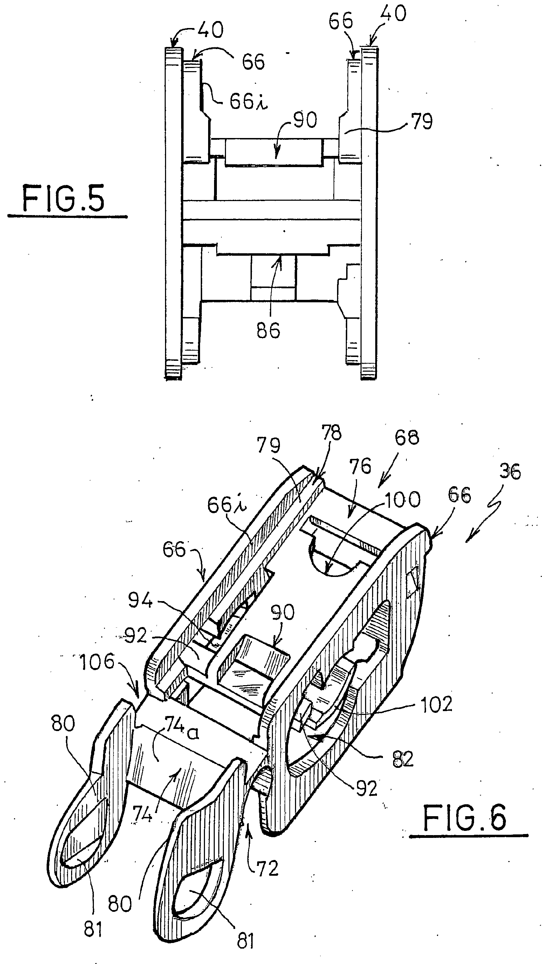

C'est pourquoi, selon un autre aspect de l'invention, et comme on peut le voir aux figures 6 et 7, l'extrémité avant 90a de la languette supérieure 90 est reliée aux joues latérales 66 du connecteur 36 par l'intermédiaire de films de matière 94, qui permettent de limiter voire empêcher les oscillations de la languette supérieure 90.

Les dimensions de ces films de matière 94 sont déterminées de manière que lorsque qu'un deuxième axe 62 est introduit dans le deuxième logement 84, la déformation vers le haut de la languette supérieure 90 ne provoque pas la rupture des films de matière 94.

Lorsque le deuxième logement 84 reçoit un deuxième axe 62 de la deuxième taille, la profondeur de la gorge 64 est suffisamment importante pour que les oscillations de la languette supérieure 90 ne soient pas suffisamment importantes pour résulter en une désolidarisation du balai 30 d'avec le bras 32b.

Ainsi, il n'est pas nécessaire que les films de matière 94 ne retiennent la languette supérieure 90, dans le cas où un deuxième axe 62 de la deuxième taille est introduit dans le deuxième logement 84. Les films de matière 94 se sont donc rompus lors de l'introduction d'un tel deuxième axe 62.

Cependant, selon une variante de cet aspect de l'invention, l'introduction d'un deuxième axe 62 de la deuxième taille dans le deuxième logement 84 ne provoque pas la rupture des films de matière 94, de mettre annulation de manière à empêcher quand même les oscillations de la languette supérieure 90 en présence d'un deuxième axe 62 de la deuxième taille.

Pour relier le balai d'essuyage 30 à un bras 32c appartenant à la troisième catégorie de bras, le connecteur 36 comporte un troisième logement 96 globalement cylindrique de section rectangulaire complémentaire à la section du bras 32c, d'axe principal longitudinal et qui est ouvert dans sa face arrière de manière que l'extrémité 34 du bras 32c puisse être introduite longitudinalement vers l'avant.

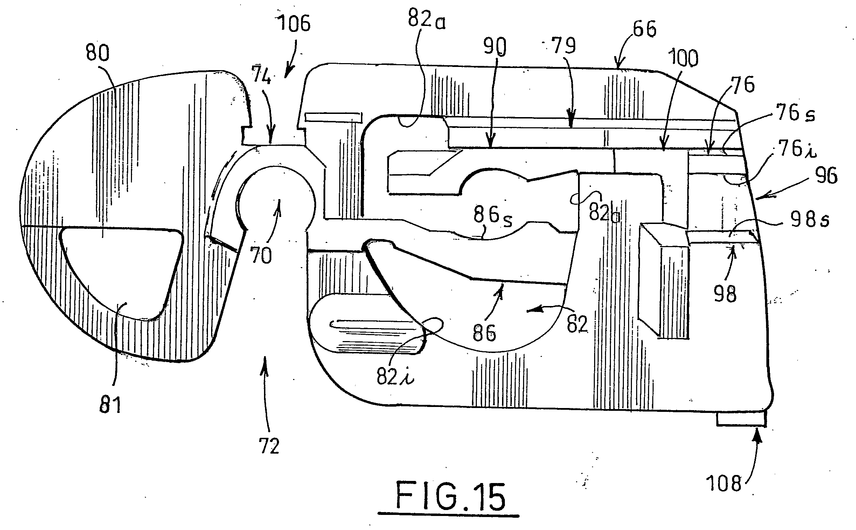

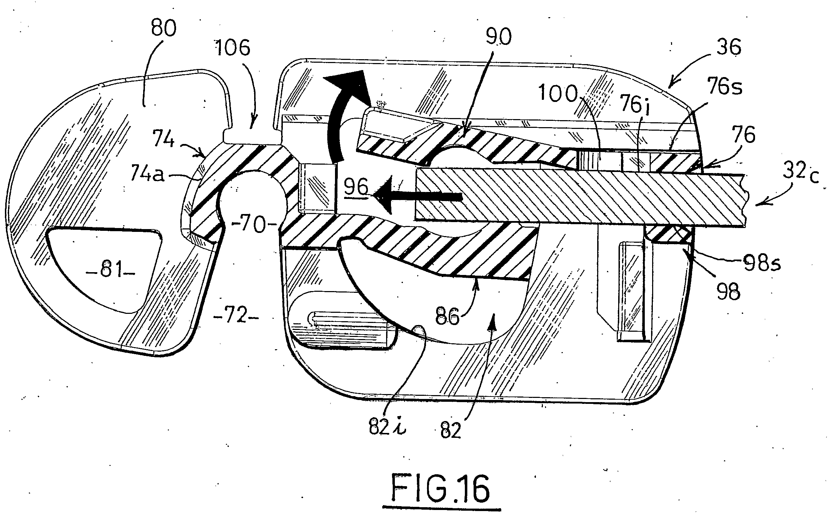

Comme on peut le voir aux figures 15 et 16, le troisième logement 96 est délimité par le tronçon avant 74, par la face inférieure 76i du tronçon supérieur arrière 76 et par la face supérieure d'un tronçon inférieur arrière 98 du corps 68 du connecteur 36.

Le troisième logement 96 est aussi délimité par les faces longitudinales verticales internes en vis-à-vis 66i des joues 66 du connecteur 36.

Selon un mode de réalisation connu, le blocage longitudinal d'un bras 32c appartenant à troisième catégorie de bras est réalisé par l'intermédiaire de l'ergot 65 qui est reçu dans un orifice complémentaire 100 réalisé dans le tronçon supérieur arrière 76.

D'une manière générale, le connecteur 36 est conçu avec des écarts dimensionnels pour permettre un montage du bras 32a, 32b, 32c sans difficultés importantes.

Cependant, une fois qu'un bras 32a, 32b, 32c est en position monté avec le connecteur 36, les écarts dimensionnels se traduisent par des jeux entre le connecteur 36 et le bras 32a, 32b, 32c qui sont la source, lors de l'utilisation de l'essuie-glace, de vibrations provoquant une usure prématurée de la raclette d'essuyage 50, ou bien des bruits désagréables.

C'est pourquoi il est prévu des moyens de rattrapage de jeux entre le bras 32a, 32b, 32c et le connecteur 36, qui permettent de limiter, voire de réduire ces vibrations.

Un premier mode de réalisation de ces moyens de rattrapage de jeux consiste en une portion inférieure 86i de la languette inférieure 86 qui est recourbée vers le bas, de manière que lorsqu'un bras 32a appartenant à la première catégorie de bras est en position montée autour du corps 68 du connecteur 36, la languette inférieure 86 exerce un effort orienté vers le bas sur la face supérieure 60s du tronçon inférieur horizontal 60 du crochet en U.

On a représenté à la figure 8 une autre variante de réalisation du connecteur 36 selon laquelle des nervures de positionnement 104 de la languette inférieure 86, qui s'étendent verticalement vers le bas le long de chaque bord latéral de la languette inférieure 86, qui permettent de réaliser le positionnement vertical et transversal du bras 32a de la troisième taille.

La distance entre les nervures de positionnement 104 est égale à la largeur L d'un bras de la troisième taille, c'est-à-dire égale à 8mm. De ce fait, lorsqu'un bras 32a de la troisième taille est en position montée avec le connecteur 36, la branche inférieure 60 du crochet en U est reçue entre les nervures de positionnement 104, et la face supérieure 60s est en appui contre la face inférieure 86i de la languette inférieure 86.

De plus, les nervures de positionnement 104 peuvent aussi être utilisées pour le rattrapage de jeux pour le montage de bras 32a de certaines tailles.

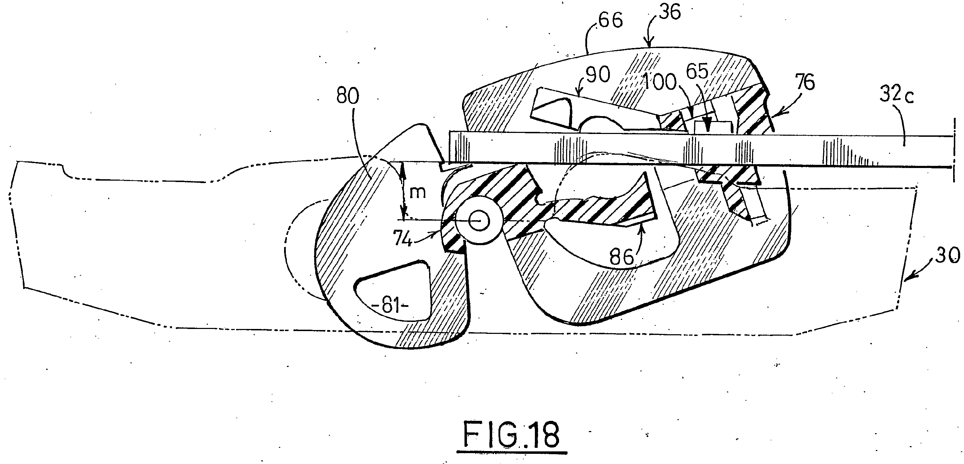

Selon un autre mode de réalisation de l'invention, représenté aux figures 16 et 18, les moyens de rattrapage de jeux sont réalisés par l'intermédiaire de la languette supérieure 90 qui est elle aussi déformable élastiquement.

L'extrémité longitudinale avant 90a de la languette supérieure 90 est recourbée vers le bas de manière que lors de l'introduction d'un bras 32c appartenant à la troisième catégorie de bras à l'intérieur du troisième logement 96 du corps 68 provoque une déformation vers le haut de la languette supérieure 90 relativement importantes, de manière à provoquer la rupture des films de matière 94.

La languette supérieure 90 est ainsi déformée élastiquement vers le haut et son extrémité avant libre 90a exerce un effort élastique de rappel sur la face supérieure 34s de l'extrémité 34 du bras 32c.

La déformation vers le haut de la languette supérieure 90 est limitée par le fait que les pions latéraux 92 viennent en butée verticalement vers le haut contre un bord supérieur 82a de l'ouverture 82.

Ainsi, comme on l'a représenté à la figure 16, la languette supérieure 90 exerce un effort de rappel orienté globalement vers le bas sur la face supérieure 34s de l'extrémité 34 du bras 32c, permettant ainsi de réaliser un rattrapage de jeux entre le connecteur 36 et un bras 32c appartenant à la troisième catégorie de bras, et d'empêcher un pivotement du bras 32c par rapport au connecteur 36.

Comme on l'a dit plus haut, la languette supérieure 90 est apte à se déformer vers le haut. Pour que cela soit possible, les ouvertures 82 des joues 66, qui sont traversés par les pions 92 de la languette supérieure 90, s'étendent verticalement de manière à autoriser un déplacement vertical vers le haut et vers le bas des pions 92 lors de l'introduction de l'extrémité 54 d'un bras 32b, 32c.

Cependant, pour limiter l'amplitude du déplacement vers le haut de la languette supérieure 90, lors de l'introduction d'un bras 32c appartenant à la troisième catégorie de bras, les ouvertures 82 des joues 66 sont dimensionnées de manière que les pions 92 de la languette supérieure 90 viennent verticalement en butée vers le haut contre les bords supérieurs 82a respectifs de l'ouverture 82 associée.

Ainsi, les déformations de la languette supérieure 90 restent inférieures à la limite d'élasticité du matériau, ce qui permet d'utiliser de nouveau le connecteur 36 pour relier le bras 32c à un balai 30 neuf.

Le connecteur 36 est destiné à se loger entre les ailes 40 de l'étrier principal 38 du balai 30. Ainsi, le dos 42 de l'étrier principal 38 est en général agencé verticalement au-dessus du troisième logement 96 du connecteur 36, venant alors gêner l'introduction d'un bras 32c de la troisième catégorie.

Pour qu'il soit possible d'introduire un l'extrémité 34 d'un bras 32c de la troisième catégorie, il est alors nécessaire de pivoter le connecteur 36 autour de l'axe principal d'articulation A. Le bras 32c est alors incliné par rapport au balai 30, ce qui peut s'avérer relativement gênant pour son utilisation.

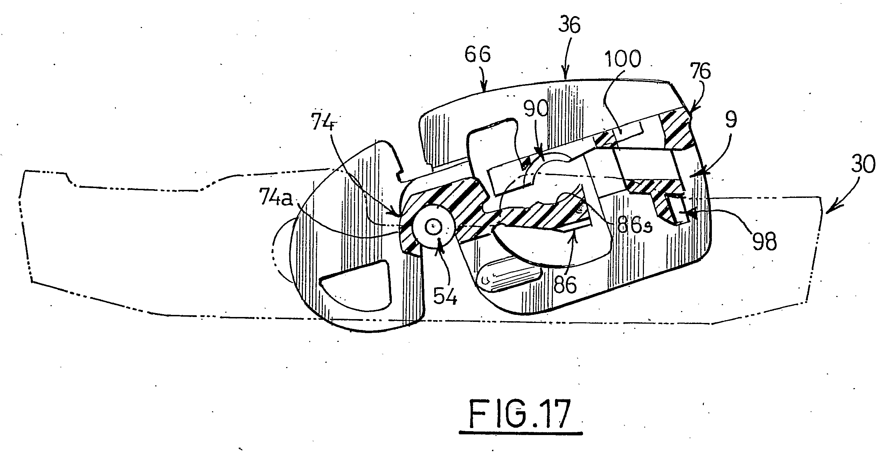

C'est pourquoi, comme on l'a représenté aux figures 17 et 18, l'axe principal du troisième axe 96 est incliné par rapport à l'axe principal du connecteur 36, de manière que la cote verticale de l'extrémité avant du troisième logement soit supérieure de celle de l'extrémité arrière.

Le troisième logement 96 est alors distant du premier axe A d'une certaine valeur "m" qui est supérieure à la distance entre le dos supérieur 42 de l'étrier principal 39 du balai par rapport au premier axe A.

Ainsi, pour introduire un bras 32c de la troisième catégorie dans le troisième logement 96, il est toujours nécessaire de pivoter le connecteur 36 autour de l'axe principal d'articulation A, cependant, lorsque le connecteur 36 est dans cette position, le troisième logement 96 est situé au-dessus du dos 42 de l'étrier principal 38, et son axe est globalement parallèle à la direction longitudinale du balai 30.

Le troisième logement 96 est alors délimité par la face inférieure du tronçon supérieur arrière et par la face supérieure du tronçon inférieur arrière, et par un bord du tronçon avant contre lequel une face inférieure de l'extrémité du bras s'appuie.

Cette modification de l'inclinaison du troisième logement 96 implique que l'amplitude du pivotement de la languette supérieure 90, lorsque le bras 32c est en position montée dans le logement, est relativement importante. Pour cela, l'ouverture 82 de chaque joue 66 s'étend verticalement sur une grande distance.

De plus, pour permettre un tel débattement, la raideur de la languette supérieure 90 doit être réduite. La languette supérieure est donc apte à se déformer plus facilement en cas de vibrations, le risque de sortie de la gorge 64 d'un deuxième axe 62 est donc accru. C'est pourquoi, selon cette variante de réalisation du connecteur, les films de matière 94 ne rompent pas lors de l'introduction d'un deuxième axe 62 de la première taille, ni d'un deuxième axe 62 de la deuxième taille.

On a décrit les joues 66 du connecteur 36 comme comportant chacune deux ouvertures 82 qui sont traversées respectivement par le deuxième axe 62 d'un bras 32b appartenant à la deuxième catégorie de bras, et par un pion latéral 92 de la languette supérieure 90. Cependant, il sera compris que chaque joue 66 peut ne comporter qu'une seule ouverture 82 qui consiste en la réunion des ouvertures décrites précédemment.

Lors du fonctionnement du mécanisme d'essuyage, et lorsqu'un bras 32b de la deuxième catégorie est relié au balai 30 par l'intermédiaire du connecteur 36, le deuxième axe 62 pivote dans le deuxième logement 84.

Le deuxième axe 62 de la deuxième taille est de dimensions importantes, sa surface périphérique est donc elle aussi importante. Ainsi, lors de son mouvement dans le deuxième logement 84, les frottements entre le deuxième axe 62 et les parois associés du connecteur 36 provoquent une usure importante de ces parois associées.

Cette usure est la source de jeux importants entre le deuxième axe 62 et le connecteur 36 qui peuvent occasionner une sortie de l'élément de verrouillage hors de la gorge 64 du deuxième axe 62 et donc une désolidarisation du bras 32b et du balai 30.

Conformément à une autre variante de réalisation de l'invention, et comme on l'a représenté aux figures 3, 9 et 12, les surfaces de contact entre le connecteur 36 et un deuxième axe 62 de la deuxième taille sont plus importantes que les surfaces de contact entre le connecteur 36 et un deuxième axe 62 de la première taille.

Selon un premier aspect de réalisation de cette variante, les surfaces de contact sont augmentées au niveau de la languette inférieure 86.

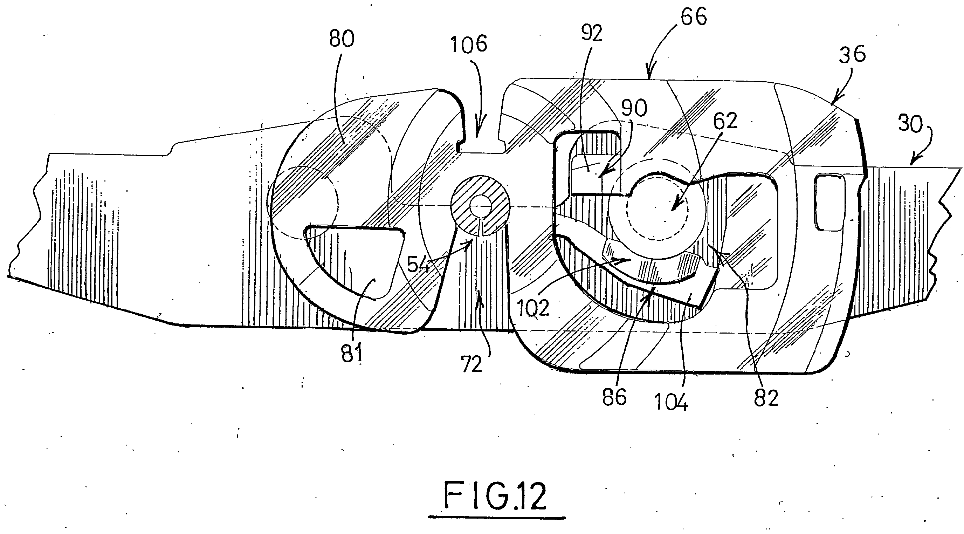

Pour cela, comme on peut le voir à la figure 12, la face supérieure 86s de la languette inférieure 86 est convexe et elle est complémentaire à la surface cylindrique externe du deuxième axe 62.

Selon un autre aspect de réalisation de cette variante, la languette inférieure 86 comporte deux bossages 102 qui s'étendent transversalement vers l'extérieur du connecteur 36 depuis le bord transversale de la languette inférieure 86, et de manière que leur extrémité transversale libre affleure avec la face longitudinale verticale externe 66e de la joue 66 associée. De plus, les bossages 102 sont cintrés de manière que leur face supérieure 102s soit elle aussi complémentaire à la surface cylindrique externe du deuxième axe 62.

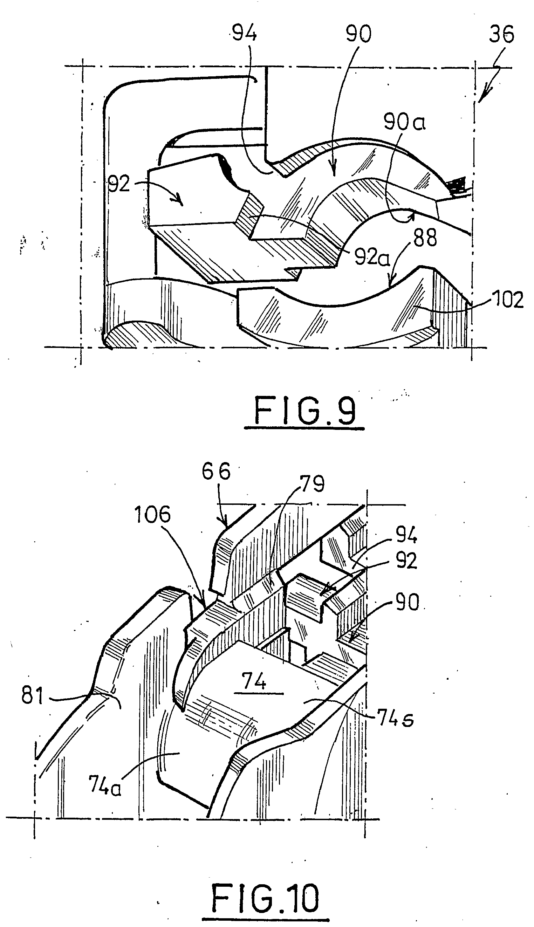

Une autre surface de contact entre le deuxième axe 62 et le connecteur 36 est située à un bord supérieur 82s de l'ouverture 82 de chaque joue 66. Ainsi, comme on l'a représenté à la figure 9, le bord supérieur 82s de chaque ouverture 82 contre lequel le deuxième axe 62 s'appuie est lui aussi cintré de manière à être complémentaire à la surface cylindrique externe du deuxième axe 62.

Enfin, comme on peut le voir à la figure 9, les pions latéraux 92 de la languette supérieure 90 comportent aussi une surface d'appui 92a contre la surface cylindrique externe d'un deuxième axe 62 de la deuxième taille qui est complémentaire à la surface cylindrique externe du deuxième axe 62.

L'ensemble de ces faces permet ainsi de réduire la pression entre le deuxième axe 62 et le connecteur 36, et donc de limiter l'usure du connecteur.

L'ouverture 82 de chaque joue 66 est donc délimité par plusieurs bords qui ont chacun une utilité pour le fonctionnement du connecteur 36.

Ces bords consistent en :
- un premier bord supérieur 82a, situé à l'avant de l'ouverture 82, a pour fonction de butée du pion latéral 92 associé de la deuxième patte 90 ;
- un deuxième bord supérieur 82s, situé à l'arrière de l'ouverture 82, et à une cote verticale par rapport au connecteur 36 inférieure à la cote verticale du premier bord supérieur. Ce deuxième bord est cintré de manière à former une surface complémentaire à la surface cylindrique externe d'un deuxième axe 62 de la deuxième taille, pour limiter l'usure du connecteur 36 ;
- un bord vertical arrière 82b contre lequel s'appuie la surface cylindrique externe d'un deuxième axe 62 de la deuxième taille pour le positionnement du deuxième axe 62 ;
- un bord inférieur 82i et un bord avant 82c contre lesquels les bossages 102 de la languette inférieure 86 viennent en butée pour limiter le débattement de la languette inférieure 86.

Un connecteur 36 conforme à l'invention permet à un utilisateur de relier un balai 30 à un bras d'entraînement 32a, 32b, 32c, sans avoir à se demander si le connecteur est effectivement adapté au type de bras.

Puisque ce connecteur 36 est indifférent du type de bras, il peut alors être monté sur le balai 30 avant sa livraison. Le montage du connecteur 36 avec le balai 30 nécessite des moyens pour sa préhension par un élément de manœuvre.

Ces moyens de préhension comportent d'une part l'orifice 100 qui est apte à recevoir un doigt de centrage (non représenté) de l'élément de manœuvre, et ils comportent d'autre part une rainure 106 réalisée dans chaque joue 66, qui s'étend verticalement vers le bas depuis le bord supérieur de la joue 66.

Pour permettre une manipulation du connecteur 36, la rainure 106 a la forme d'un "T" inversé, c'est-à-dire que la branche horizontale du "T" est située dessous la branche verticale. Chaque rainure 106 est apte à recevoir un deuxième doigt (non représenté) de forme complémentaire pour la manipulation du connecteur 36.

De plus chaque rainure 106 est agencée longitudinalement de manière que son plan transversal vertical de symétrie soit à la même cote longitudinale que l'axe transversal A. Ainsi, lors du montage du connecteur 36 sur le balai 30, c'est-à-dire lors de l'insertion du premier axe d'articulation 54 dans le premier logement cylindrique 70, le deuxième doigt de l'élément de manœuvre exerce un effort vertical d'insertion qui est centré sur l'axe transversal A d'articulation, et donc qui limite les déformations potentielles du connecteur qui pourraient l'endommager.

Selon un premier mode de réalisation de ces rainures 106, représenté à la figure 4, le bord inférieur de la branche horizontale de chaque rainure 106 affleure avec la face supérieure 74s de l'élément avant 74 du corps 68, ce qui permet d'exercer un effort d'insertion sur une surface horizontale plus importante.

Selon un deuxième mode de réalisation de ces rainures 106, représenté à la figure 10, le bord inférieur de la branche horizontale de chaque rainure 106 s'étend au-dessus de la face supérieure 74s de l'élément avant 74 du corps 68. Ainsi, la nervure 79 associée peut s'étendre longitudinalement vers l'avant jusqu'à l'extrémité avant du tronçon avant 74 du corps 68, permettant de ce fait d'augmenter la surface de support de la branche supérieure 56 du crochet en U.

Lorsque la raclette 50 du balai 30 est usée, il est nécessaire de désolidariser le bras 32a, 32b, 32c du balai 30, c'est-à-dire de désolidariser le bras 32a, 32b, 32c du connecteur 36.

La désolidarisation d'un bras 32a,32c de la première ou de la troisième catégorie s'effectue par un mouvement longitudinal vers l'avant, respectivement vers l'arrière du connecteur 36.

Pour la désolidarisation d'un bras 32c de la deuxième catégorie, la languette supérieure 90 s'oppose à tout mouvement transversal du bras 32c par rapport au connecteur 36, il est nécessaire de sortir la deuxième languette 90 de la gorge 64 du deuxième axe 62, avant d'effectuer un mouvement transversal du bras 32c par rapport au connecteur 36.

Aucune des languettes supérieure 90 ou inférieure 86 ne comporte de moyens de préhension permettant de la déformer pour permettre la sortie de la languette supérieure 90 hors de la gorge 64.

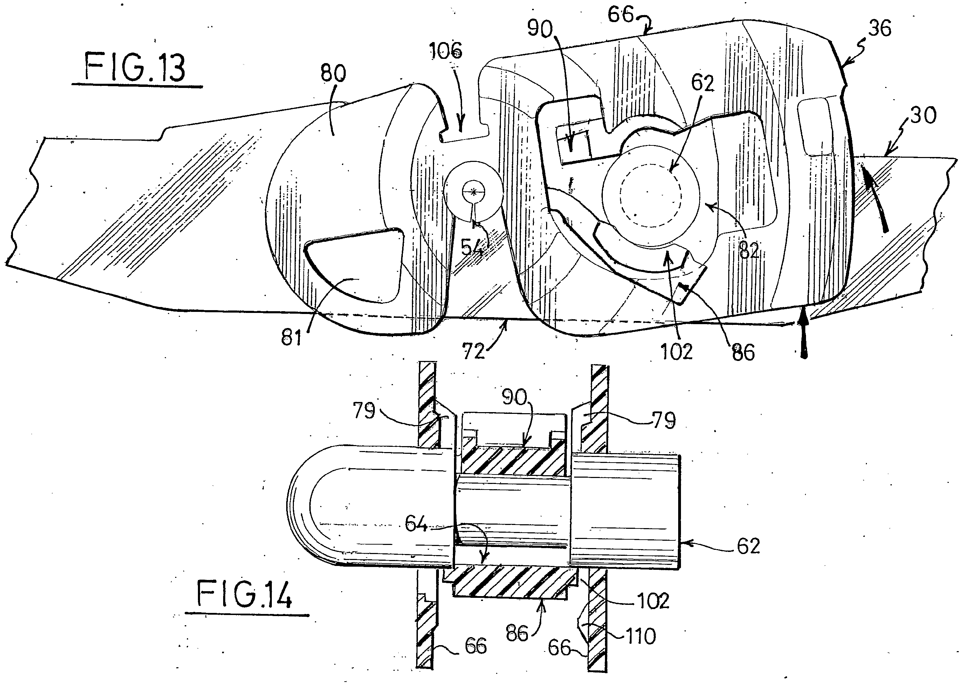

C'est pourquoi, comme on l'a représenté à la figure 13, pour pouvoir sortir la languette supérieure 90 hors de la gorge 64, on pivote le connecteur 36 autour de l'axe transversal A d'articulation par rapport à l'étrier principal 38 du balai 30, en soulevant la partie arrière du connecteur 36, c'est-à-dire ici par un mouvement du connecteur 36 dans le sens anti-horaire.

Le deuxième axe 62 étant immobile, il empêche la languette inférieure 86 de se soulever vers le haut. La languette supérieure 90 n'est pas empêchée de se soulever, elle peut donc sortir de la gorge 64.

Lorsque le pivotement du connecteur 36 est suffisant pour que la languette supérieure 90 soit complètement sortie de la gorge 64, il est possible de retirer le deuxième axe 62 par un mouvement transversal du bras 32c.

Le pivotement du connecteur 36 est obtenu en agissant sur le bord inférieur 66b des ailes 66. Le connecteur 36 étant un élément de faibles dimensions, il peut parfois s'avérer relativement complexe d'effectuer cette manœuvre car les ailes 66 sont parfois difficiles d'accès.

C'est pourquoi, selon une autre variante de réalisation du connecteur 36, représentée à la figure 15, celui-ci comporte une traverse 108 qui relie les deux ailes 66, au niveau de leur extrémité inférieure arrière, qui sert d'élément de manœuvre pour effectuer le pivotement du connecteur 36.

Il sera compris que des inversions mécaniques simples peuvent constituer des variantes de réalisation de l'invention. Par exemple, la languette inférieure 86 peut s'étendre longitudinalement vers l'avant depuis le tronçon inférieur arrière 98. De même, la languette supérieure 90 peut s'étendre longitudinalement vers l'arrière depuis le tronçon avant 74, sans sortir du domaine technique de l'invention.

Enfin, le connecteur 36 a été décrit comme permettant de relier un bras d'essuie-glace 32a, 32b, 32c à un balai d'essuyage 30 comportant une structure articulée, il sera compris qu'un connecteur 36 conforme à l'invention peut aussi relier un bras 32a, 32b, 32c à un balai 30 dont la structure articulée est replacée par des vertèbres, aussi appelé "flat-blade".

## Revendications

1. Connecteur (36) pour relier une extrémité d'un bras (32a, 32b, 32c) d'essuie-glace à un premier axe transversal d'articulation (54) appartenant à un élément de structure (38) d'un balai d'essuyage (30), le connecteur étant apte à être reçu au moins en partie dans le fond de l'extrémité en forme de crochet en U d'un bras (32a) qui appartient à une première catégorie, le connecteur (36) comportant :
- un premier logement (70) dans lequel le premier axe d'articulation (54) peut être introduit,
- un deuxième logement (84) destiné à recevoir un deuxième axe transversal (62), qui appartient à une deuxième catégorie de bras (32b) pouvant avoir au moins une première taille et qui s'étend transversalement depuis un bord latéral (34a) de l'extrémité (34) du bras (32b),
- un troisième logement cylindrique (96) apte à recevoir l'extrémité (34) d'une troisième catégorie de bras (32c) consistant en un tronçon de profilé qui s'étend globalement longitudinalement vers l'avant, ledit troisième logement étant ouvert dans sa face arrière,
ledit deuxième logement (84) étant délimité en partie par
- une première languette inférieure (86) déformable élastiquement qui s'étend globalement longitudinalement, dont une première extrémité longitudinale (86a) est fixée au connecteur et qui est apte à s'escamoter pour permettre l'introduction du deuxième axe (62), et provoquer le verrouillage transversal du deuxième axe (62) en position montée dans le deuxième logement (84),
- une languette supérieure (90) qui est apte à se loger au moins en partie dans une gorge périphérique (64) du deuxième axe (62) pour réaliser le verrouillage transversal du deuxième axe (62), en association avec la languette inférieure (86),
le corps du connecteur comportant un tronçon avant (74) qui délimite le premier logement (70), dont la paroi externe avant (74a) est apte à être reçue dans le fond du crochet en U du bras (32a), un tronçon supérieur arrière (76) et un tronçon inférieur arrière (98), l'extrémité longitudinale avant (86a) de la languette inférieure (86) étant fixée au tronçon avant (74),
ledit troisième logement (96) étant délimité par le tronçon avant (74), par la face inférieure (76i) du tronçon supérieur arrière (76) et par la face supérieure du tronçon inférieur arrière (98), les bords latéraux de la languette inférieure (86) étant prolongés transversalement vers l'extérieur par des bossages (102) et les bossages (102) de la languette inférieure (86) s'étendant transversalement en traversant un orifice (82) d'une joue latérale (66) associée du connecteur, de manière à ce que l'extrémité transversale libre de chaque bossage affleure avec la face verticale externe (66e) de la joue (66) associée.

2. Connecteur (36) selon la revendication 1, **caractérisé en ce que** le connecteur comporte des moyens d'adaptation (78) de sorte qu'il soit apte à être reçu dans le fond d'extrémités de bras (32a) de la première catégorie et de tailles différentes.

3. Connecteur (36) selon la revendication précédente, **caractérisé en ce que** les moyens d'adaptation (78) comportent des formes (78) agencées en relief sur des faces longitudinales internes (66i) du connecteur en vis-à-vis de joues latérales (66) du connecteur.

4. Connecteur (36) selon l'une quelconque des revendications précédentes, **caractérisé en ce que** la languette supérieure (90) est de largeur transversale complémentaire de la largeur de la gorge annulaire (64) du deuxième axe (62), de manière à être reçue sans jeu dans la gorge (64).

5. Connecteur (36) selon l'une quelconque des revendications précédentes, **caractérisé en ce que** la languette supérieure (90) est reliée à chacune des joues du connecteur (36) par l'intermédiaire de films de matière (94) dont les dimensions sont déterminées de manière que l'introduction d'un deuxième axe (62) de la première taille ne provoque pas la rupture des films de matière (94).

6. Connecteur (36) selon l'une quelconque des revendications précédentes, **caractérisé en ce que** l'extrémité longitudinale arrière de la languette supérieure (90) est fixée au tronçon supérieur arrière (76).

7. Connecteur (36) selon la revendication 5, **caractérisé en ce que** l'introduction d'un bras (32c) de la troisième catégorie dans le troisième logement (96) provoque la rupture des films de matière (94).

8. Connecteur (36) selon l'une quelconque des revendications précédentes, **caractérisé en ce que** le tronçon supérieur arrière (76) comporte un orifice vertical (100) qui est apte à recevoir un ergot (65) de l'extrémité (34) d'un bras (32c) appartenant à la troisième catégorie de bras, qui fait saillie vers le haut par rapport à la face supérieure de l'extrémité du bras, pour réaliser le blocage longitudinal de l'extrémité du bras, en position montée dans le troisième logement (96).

9. Connecteur (36) selon l'une quelconque des revendications précédentes, **caractérisé en ce qu'**une portion de la languette inférieure (86) est recourbée vers la bas de manière que, pour au moins une taille d'un bras (32a) appartenant à la première catégorie de bras, la languette inférieure (86) est déformée élastiquement vers le haut de manière à exercer un effort globalement vertical vers le bas sur la face supérieure d'un deuxième tronçon inférieur horizontal (60) de l'extrémité du bras.

10. Connecteur (36) selon l'une quelconque des revendications précédentes, **caractérisé en ce que** la languette supérieure (90) comporte deux pions latéraux (92) agencés de part et d'autre de l'extrémité longitudinale avant (90a) de la languette supérieure (90), qui s'étendent transversalement vers l'extérieur du connecteur (36), et qui traversent un orifice (82) de la joue latérale associée, de manière que l'extrémité libre de chaque pion (92) affleure avec la face verticale externe (66e) de la joue associée.

11. Connecteur (36) selon la revendication précédente, **caractérisé en ce que** lorsqu'un bras (32c) appartenant à la troisième catégorie de bras est en position montée dans le troisième logement (96), les pions latéraux (92) sont en butée verticale contre un bord supérieur (82a) de l'orifice (82) de la joue (66) associé.

12. Connecteur (36) selon l'une quelconque des revendications précédentes, **caractérisé en ce que** chaque bossage (102) est cintré de manière que la courbure de sa face supérieure (102s) soit globalement complémentaire à la paroi cylindrique externe d'un deuxième axe (62) de la deuxième taille.

13. Connecteur (36) selon l'une quelconque des revendications précédentes, **caractérisé en ce que** l'extrémité avant libre (90a) de la languette supérieure (90) est recourbée vers le bas, de manière que lorsque l'extrémité d'un bras (32c) appartenant à la troisième catégorie de bras est introduite dans le troisième logement (96), la languette supérieure (90) est déformée élastiquement vers le haut, et l'extrémité avant libre (90a) de la languette supérieure (90) exerce un effort de rappel orienté globalement vers le bas sur la face supérieure de l'extrémité (34) du bras (32c).

14. Connecteur (36) selon l'une quelconque des revendications précédentes, **caractérisé en ce que** le tronçon d'extrémité avant (66a) de chaque joue (66), qui s'étend longitudinalement en porte-à-faux en avant du corps (68), est déformable élastiquement et comporte, sur sa face longitudinale verticale interne, une butée (80) formant rampe, de manière à s'escamoter lors de l'introduction de l'extrémité d'un bras (32a) appartenant à la première catégorie de bras, et de manière à réaliser le blocage en position montée du crochet en U autour du corps (68) du connecteur (36)

15. Connecteur (36) selon la revendication précédente, **caractérisé en ce que** la butée formant rampe (80) s'étend sur une portion supérieure du tronçon d'extrémité avant (66a) de la joue (66) associée et **en ce qu'**une portion inférieure du tronçon d'extrémité avant (66a) comporte une ouverture (72) d'introduction du crochet en U.

16. Connecteur (36) selon l'une quelconque des revendications précédentes, en combinaison avec la revendication 3, **caractérisé en ce que** les formes en relief (78) comportent une nervure (79) agencée sur la face longitudinale verticale interne (66i) de chaque joue (66) du connecteur (36), qui s'étend longitudinalement au-dessus de la face supérieure (76s) du tronçon supérieur arrière (76) du corps (68), pour le positionnement d'une extrémité (34) de bras (32a) appartenant à la première catégorie de bras.

17. Connecteur (36) selon l'une quelconque des revendications précédentes, **caractérisé en ce que** la face inférieure (86i) de la languette inférieure (86) comporte des nervures (104) de positionnement vertical et/ou transversal d'un bras (32a) de la première catégorie d'au moins une taille.

18. Connecteur (36) selon la revendication précédente, **caractérisé en ce que** chaque nervure de positionnement (104) s'étend globalement verticalement vers le bas le long d'un bord latéral de la face inférieure (86i) de la languette inférieure (86)

19. Connecteur (36) selon l'une quelconque des revendications précédentes, en combinaison avec la revendication 11, **caractérisé en ce que** les pions latéraux (92) comportent chacun une surface d'appui (92a) contre la surface cylindrique externe d'un deuxième axe (62) de la deuxième taille qui est complémentaire à cette paroi cylindrique externe.

20. Connecteur (36) selon la revendication précédente, **caractérisé en ce que** la courbure d'un bord supérieur (82s) de l'orifice (82) d'une joue (66) est sensiblement identique à la courbure de la paroi cylindrique externe d'un deuxième axe (62) de la deuxième taille.

21. Connecteur (36) selon l'une quelconque des revendications précédentes, **caractérisé en ce que** chaque joue (66) comporte une rainure (106) qui s'étend verticalement vers le bas depuis son bord supérieur et qui est complémentaire à un élément de manœuvre du connecteur (36)

22. Connecteur (36) selon la revendication précédente, **caractérisé en ce que** la rainure (106) forme globalement un T inversé dont le bord inférieur de la branche horizontale s'étend verticalement au-dessus de la face supérieure (74s) de l'élément avant (74) du corps (68) du connecteur (36).

23. Connecteur (36) selon la revendication précédente, **caractérisé en ce que** les nervures (79) s'étendent longitudinalement vers l'avant de manière à s'étendre jusqu'à l'extrémité avant du tronçon avant (74) du corps (68) du connecteur (36).

24. Connecteur (36) selon l'une quelconque des revendications précédentes, **caractérisé en ce qu'**il comporte une traverse (108) qui relie les extrémités inférieures arrières de chaque joue (66).

## Patentansprüche

1. Verbinder (36) zum Verbinden eines Scheibenwischerarmes (32a, 32b, 32c) mit einer ersten quer verlaufenden Gelenkachse (54), die zu einem Strukturelement (38) eines Wischblattes (30) gehört, wobei der Verbinder geeignet ist, wenigstens teilweise im Boden des in Form eines U-Hakens ausgebildeten Endes eines Armes (32a), welcher zu einer ersten Kategorie gehört, aufgenommen zu werden, wobei der Verbinder (36) aufweist:
- eine erste Aufnahme (70), in welche die erste Gelenkachse (54) eingeführt werden kann,
- eine zweite Aufnahme (84), die dazu bestimmt ist, eine zweite quer verlaufende Achse (62) aufzunehmen, welche zu einer zweiten Kategorie von Armen (32b) gehört, die wenigstens eine erste Größe haben können, und welche sich von einem Seitenrand (34a) des Endes (34) des Armes (32b) aus quer erstreckt,
- eine dritte, zylindrische Aufnahme (96), die geeignet ist, das Ende (34) einer dritten Kategorie von Armen (32c) aufzunehmen, das aus einem Profilabschnitt besteht, der sich im Wesentlichen in Längsrichtung nach vorn erstreckt, wobei die dritte Aufnahme an ihrer hinteren Seite offen ist, wobei die zweite Aufnahme (84) teilweise begrenzt wird durch
- eine erste, elastisch verformbare untere Zunge (86), welche sich im Wesentlichen in Längsrichtung erstreckt, von der ein erstes Längsende (86a) an dem Verbinder befestigt ist und welche geeignet ist wegzuschwenken, um die Einführung der zweiten Achse (62) zu ermöglichen, und die Querverriegelung der zweiten Achse (62) in der in der zweiten Aufnahme (84) angebrachten Position zu bewirken,
- eine obere Zunge (90), welche geeignet ist, wenigstens teilweise in einer umlaufenden Nut (64) der zweiten Achse (62) aufgenommen zu werden, um in Verbindung mit der unteren Zunge (86) die Querverriegelung der zweiten Achse (62) durchzuführen,
wobei der Körper des Verbinders einen vorderen Abschnitt (74), welcher die erste Aufnahme (70) begrenzt und dessen vordere äußere Wand (74a) geeignet ist, im Boden des U-Hakens des Armes (32a) aufgenommen zu werden, einen hinteren oberen Abschnitt (76) und einen hinteren unteren Abschnitt (98) aufweist, wobei das vordere Längsende (86a) der unteren Zunge (86) an dem vorderen Abschnitt (74) befestigt ist,
wobei die dritte Aufnahme (96) von dem vorderen Abschnitt (74), von der Unterseite (76i) des hinteren oberen Abschnitts (76) und von der Oberseite des hinteren unteren Abschnitts (98) begrenzt wird,
wobei die Seitenränder der unteren Zunge (86) in Querrichtung nach außen durch Erhebungen (102) verlängert sind und die Erhebungen (102) der unteren Zunge (86) sich in Querrichtung erstrecken und dabei eine Öffnung (82) einer zugeordneten seitlichen Wange (66) des Verbinders durchqueren, derart, dass das freie Querende jeder Erhebung mit der äußeren vertikalen Seite (66e) der zugeordneten Wange (66) bündig ist.

2. Verbinder (36) nach Anspruch 1, **dadurch gekennzeichnet, dass** der Verbinder Anpassungsmittel (78) aufweist, derart, dass er geeignet ist, im Boden von Enden von Armen (32a) der ersten Kategorie und von verschiedenen Größen aufgenommen zu werden.

3. Verbinder (36) nach dem vorhergehenden Anspruch, **dadurch gekennzeichnet, dass** die Anpassungsmittel (78) Formen (78) aufweisen, die erhaben auf inneren Längsseiten (66i) des Verbinders gegenüber von seitlichen Wangen (66) des Verbinders angeordnet sind.

4. Verbinder (36) nach einem der vorhergehenden Ansprüche, **dadurch gekennzeichnet, dass** die obere Zunge (90) eine Breite in Querrichtung aufweist, die komplementär zur Breite der Ringnut (64) der zweiten Achse (62) ist, so dass sie ohne Spiel in der Nut (64) aufgenommen wird.

5. Verbinder (36) nach einem der vorhergehenden Ansprüche, **dadurch gekennzeichnet, dass** die obere Zunge (90) mit jeder der Wangen des Verbinders (36) über Materialfolien (94) verbunden ist, deren Abmessungen so bestimmt sind, dass die Einführung einer zweiten Achse (62) der ersten Größe kein Reißen der Materialfolien (94) hervorruft.

6. Verbinder (36) nach einem der vorhergehenden Ansprüche, **dadurch gekennzeichnet, dass** das hintere Längsende der oberen Zunge (90) am hinteren oberen Abschnitt (76) befestigt ist.

7. Verbinder (36) nach Anspruch 5, **dadurch gekennzeichnet, dass** die Einführung eines Armes (32c) der dritten Kategorie in die dritte Aufnahme (96) das Reißen der Materialfolien (94) hervorruft.

8. Verbinder (36) nach einem der vorhergehenden Ansprüche, **dadurch gekennzeichnet, dass** der hintere obere Abschnitt (76) eine vertikale Öffnung (100) aufweist, welche geeignet ist, einen Ansatz (65) des Endes (34) eines zu der dritten Kategorie von Armen gehörenden Armes (32c) aufzunehmen, der bezüglich der Oberseite des Endes des Armes nach oben vorsteht, um die Arretierung des Endes des Armes in Längsrichtung in der in der dritten Aufnahme (96) angebrachten Position zu bewirken.

9. Verbinder (36) nach einem der vorhergehenden Ansprüche, **dadurch gekennzeichnet, dass** ein Teilabschnitt der unteren Zunge (86) nach unten gekrümmt ist, derart, dass für wenigstens eine Größe eines zu der ersten Kategorie von Armen gehörenden Armes (32a) die untere Zunge (86) elastisch nach oben verformt wird, so dass sie eine im Wesentlichen vertikal nach unten gerichtete Kraft auf die Oberseite eines zweiten horizontalen unteren Abschnitts (60) des Endes des Armes ausübt.

10. Verbinder (36) nach einem der vorhergehenden Ansprüche, **dadurch gekennzeichnet, dass** die obere Zunge (90) zwei beiderseits des vorderen Längsendes (90a) der oberen Zunge (90) angeordnete seitliche Zapfen (92) aufweist, welche sich in Querrichtung zur Außenseite des Verbinders (36) hin erstrecken und welche eine Öffnung (82) der zugeordneten seitlichen Wange durchqueren, so dass das freie Ende jedes Zapfens (92) mit der äußeren vertikalen Seite (66e) der zugeordneten Wange bündig ist.

11. Verbinder (36) nach dem vorhergehenden Anspruch, **dadurch gekennzeichnet, dass**, wenn sich ein zu der dritten Kategorie von Armen gehörender Arm (32c) in einer in der dritten Aufnahme (96) angebrachten Position befindet, die seitlichen Zapfen (92) sich vertikal in Anlage an einem oberen Rand (82a) der Öffnung (82) der zugeordneten Wange (66) befinden.

12. Verbinder (36) nach einem der vorhergehenden Ansprüche, **dadurch gekennzeichnet, dass** jede Erhebung (102) gewölbt ist, derart, dass die Krümmung ihrer Oberseite (102s) im Wesentlichen komplementär zu der äußeren zylindrischen Wand einer zweiten Achse (62) der zweiten Größe ist.

13. Verbinder (36) nach einem der vorhergehenden Ansprüche, **dadurch gekennzeichnet, dass** das freie vordere Ende (90a) der oberen Zunge (90) nach unten gekrümmt ist, so dass, wenn das Ende eines zu der dritten Kategorie von Armen gehörenden Armes (32c) in die dritte Aufnahme (96) eingeführt wird, die obere Zunge (90) elastisch nach oben verformt wird und das freie vordere Ende (90a) der oberen Zunge (90) eine im Wesentlichen nach unten gerichtete Rückstellkraft auf die Oberseite des Endes (34) des Armes (32c) ausübt.

14. Verbinder (36) nach einem der vorhergehenden Ansprüche, **dadurch gekennzeichnet, dass** der vordere Endabschnitt (66a) jeder Wange (66), welcher sich in Längsrichtung auskragend vor dem Körper (68) erstreckt, elastisch verformbar ist und auf seiner inneren vertikalen Längsseite einen eine Rampe bildenden Anschlag (80) aufweist, so dass er bei der Einführung des Endes eines zu der ersten Kategorie von Armen gehörenden Armes (32a) wegschwenkt und so dass er die Arretierung in der Position der Anbringung des U-Hakens um den Körper (68) der Verbinders (36) herum bewirkt.

15. Verbinder (36) nach dem vorhergehenden Anspruch, **dadurch gekennzeichnet, dass** sich der eine Rampe bildende Anschlag (80) auf einem oberen Teilabschnitt des vorderen Endabschnitts (66a) der zugeordneten Wange (66) erstreckt, und dadurch, dass ein unterer Teilabschnitt des vorderen Endabschnitts (66a) eine Einführungsöffnung (72) für den U-Haken aufweist.

16. Verbinder (36) nach einem der vorhergehenden Ansprüche in Kombination mit Anspruch 3, **dadurch gekennzeichnet, dass** die erhabenen Formen (78) eine auf der inneren vertikalen Längsseite (66i) jeder Wange (66) des Verbinders (36) angeordnete Rippe (79), welche sich in Längsrichtung über der Oberseite (76s) des hinteren oberen Abschnitts (76) des Körpers (68) erstreckt, zur Positionierung eines Endes (34) von zu der ersten Kategorie von Armen gehörenden Armen (32a) aufweisen.

17. Verbinder (36) nach einem der vorhergehenden Ansprüche, **dadurch gekennzeichnet, dass** die Unterseite (86i) der unteren Zunge (86) Rippen (104) zur vertikalen und/oder Querpositionierung eines Armes (32a) der ersten Kategorie wenigstens einer Größe aufweist.

18. Verbinder (36) nach dem vorhergehenden Anspruch, **dadurch gekennzeichnet, dass** sich jede Positionierungsrippe (104) im Wesentlichen vertikal nach unten entlang eines seitlichen Randes der Unterseite (86i) der unteren Zunge (86) erstreckt.

19. Verbinder (36) nach einem der vorhergehenden Ansprüche in Kombination mit Anspruch 11, **dadurch gekennzeichnet, dass** die seitlichen Zapfen (92) jeweils eine Anlagefläche (92a) zur Anlage an der äußeren zylindrischen Fläche einer zweiten Achse (62) der zweiten Größe aufweisen, welche komplementär zu dieser äußeren zylindrischen Wand ist.

20. Verbinder (36) nach dem vorhergehenden Anspruch, **dadurch gekennzeichnet, dass** die Krümmung eines oberen Randes (82s) der Öffnung (82) einer Wange (66) im Wesentlichen identisch mit der Krümmung der äußeren zylindrischen Wand einer zweiten Achse (62) der zweiten Größe ist.

21. Verbinder (36) nach einem der vorhergehenden Ansprüche, **dadurch gekennzeichnet, dass** jede Wange (66) einen Einschnitt (106) aufweist, welcher sich von ihrem oberen Rand aus vertikal nach unten erstreckt und welcher komplementär zu einem Betätigungselement des Verbinders (36) ist.

22. Verbinder (36) nach dem vorhergehenden Anspruch, **dadurch gekennzeichnet, dass** der Einschnitt (106) im Wesentlichen ein umgekehrtes "T" bildet, bei dem sich der untere Rand des horizontalen Balkens vertikal über der Oberseite (74s) des vorderen Elements (74) des Körpers (68) des Verbinders (36) erstreckt.

23. Verbinder (36) nach dem vorhergehenden Anspruch, **dadurch gekennzeichnet, dass** sich die Rippen (79) in Längsrichtung nach vorn erstrecken, derart, dass sie sich bis zum vorderen Ende des vorderen Abschnitts (74) des Körpers (68) des Verbinders (36) erstrecken.

24. Verbinder (36) nach einem der vorhergehenden Ansprüche, **dadurch gekennzeichnet, dass** er eine Querstrebe (108) aufweist, welche die hinteren unteren Enden jeder Wange (66) verbindet.

## Claims

1. A connector (36) for connecting one end of a windshield wiper arm (32a, 32b, 32c) to a first transverse hinge pin (54) belonging to a structure element (38) of a wiper blade unit (30), the connector being suitable for being received at least in part against the inside end wall of the end of an arm (32a) that belongs to a first category of arm, which end is in the form of a U-shaped hook, the connector (36) comprising:
- a first recess (70) into which the first hinge pin (54) can be inserted;
- a second recess (84) designed to receive a second transverse pin (62) which belongs to a second category of arm (32b) that can be of at least a first size, and which extends transversely from a side edge (34a) of the end (34) of the arm (32b),
- a cylindrical third recess (96) suitable for receiving the end (34) of a third category of arm (32c), which end consists in a shaped-section member segment that extends substantially longitudinally forwards, said third recess being open in its rear face,
said second recess (84) being defined in part by
- a bottom first tongue (86) that is elastically deformable and that extends substantially longitudinally, a first longitudinal end (86a) of which tongue is fastened to the connector, the bottom tongue being suitable for retracting so as to enable the second pin (62) to be inserted, and for causing the second pin (62) to be locked transversely in the position in which it is mounted in the second recess (84),
- a top tongue (90) that is suitable for being received at least in part in a peripheral groove (64) in the second pin (62) so as to lock the second pin (62) transversely, in association with the bottom tongue (86),
the body of the connector comprising a front segment (74) that defines the first recess (70), the front outside wall (74a) of the front segment being suitable for being received against the inside end wall of the U-shaped hook of the arm (32a), a top rear segment (76) and a bottom rear segment (98), the front longitudinal end (86a) of the bottom tongue (86) is fastened to the front segment (74),
the third recess (96) being defined by the front segment (74), by the bottom face (76i) of the rear top segment (76), and by the top face of a rear bottom segment (98),
the side edges of the bottom tongue (86) being extended transversely outwards by projections (102) and the projections (102) of the bottom tongue (86) extending transversely while passing through an orifice (82) in the associated side wall (66) so that the free transverse end of each projection comes flush with the outside vertical face (66e) of the associated cheek plate (66).

2. A connector (36) according to claim 1, **characterized in that** the connector comprises adapter means (78) so that it is suitable for being received against the inside end walls of ends of arms (32a) of the first category and of various sizes.

3. A connector (36) according to the preceding claim, **characterized in that** the adapter means (78) comprise shapes in relief (78) provided on the facing inside longitudinal faces (66i) of side cheek plates (66) of the connector.

4. A connector (36) according to any preceding claim, **characterized in that** the top tongue (90) is of transverse width complementary to the width of the annular groove (64) in the second pin (62) so as to be received snugly in the groove (64).

5. A connector (36) according to any preceding claim, **characterized in that** the top tongue (90) is connected to each of the cheek plates of the connector (36) via films of material (94) whose dimensions are determined so that inserting a second pin (62) of the first size does not cause the films of material (94) to break.

6. A connector (36) according to any preceding claim, **characterized in that** the rear longitudinal end of the top tongue (90) is fastened to the rear top segment (76).

7. A connector (36) according to claim 5, **characterized in that** the insertion of an arm (32c) of the third category into the third recess (96) causes the films of material (94) to break.

8. A connector (36) according to any preceding claim, **characterized in that** the rear top segment (76) comprises a vertical orifice (100) that is suitable for receiving a lug (65) on the end (34) of an arm (32c) belonging to the third category of arm, which lug projects upwards relative to the top face of the end of the arm, for longitudinally locking the end of the arm in the position in which it is mounted in the third recess (96).

9. A connector (36) according to any preceding claim, **characterized in that** a portion of the bottom tongue (86) is curved downwards so that, for at least one size of arm (32a) belonging to the first category of arm, the bottom tongue (86) is deformed elastically upwards so as to exert a substantially vertical force downwards on the top face of a horizontal bottom segment (60) of the end of the arm.

10. A connector (36) according to any preceding claim, **characterized in that** the top tongue (90) comprises two side studs (92) disposed on either side of the front longitudinal end (90a) of the top tongue (90), which studs extend transversely towards the outside of the connector (36) and pass through respective orifices (82) in the associated side cheek plates so that the free end of each stud (92) comes flush with the outside vertical face (66e) of the associated cheek plate.

11. A connector (36) according to the preceding claim, **characterized in that**, when an arm (32c) belonging to the third category of arm is in the position in which it is mounted in the third recess (96), each of the side studs (92) is in vertical abutment against a top edge (82a) of the orifice (82) of the associated cheek plate (66).

12. A connector (36) according to any preceding claim, **characterized in that** each projection (102) is curved so that the curvature of its top face (102s) is substantially complementary to the outside cylindrical wall of a second pin (62) of the second size.

13. A connector (36) according to any preceding claim, **characterized in that** the free front end (90a) of the top tongue (90) is curved downwards so that when the end of an arm (32c) belonging to the third category of arm is inserted into the third recess (96), the top tongue (90) is deformed elastically upwards, and the free front end (90a) of the top tongue (90) exerts a return force directed substantially downwards on the top face of the end (34) of the arm (32c).

14. A connector (36) according to any preceding claim, **characterized in that** the front end segment (66a) of each cheek plate (66), which segment extends cantilevered out forwards from the body (68), is elastically deformable and, on its inside vertical longitudinal face, comprises a ramp-forming abutment (80) so as to retract when the end of an arm (32a) belonging to the first category of arm is inserted, and so as to lock the U-shaped hook in the position in which it is mounted around the body (68) of the connector (36).

15. A connector (36) according to the preceding claim, **characterized in that** the ramp-forming abutment (80) extends over a top portion of the front end segment (66a) of the associated cheek plate (66), and **in that** a bottom portion of the front end segment (66a) comprises an opening (72) for insertion of the U-shaped hook.

16. A connector (36) according to any preceding claim, in combination with claim 3, **characterized in that** the shapes in relief (78) comprise a rib (79) provided on the inside vertical longitudinal face (66i) of each cheek plate (66) of the connector (36), which rib extends longitudinally above the top face (76s) of the rear top segment (76) of the body (68) for positioning the end (34) of an arm (32a) belonging to the first category of arm.

17. A connector (36) according to any preceding claim, **characterized in that** the bottom face (86i) of the bottom tongue (86) comprises ribs (104) for vertically and/or transversely positioning an arm (32a) of the first category and of at least one size.

18. A connector (36) according to the preceding claim, **characterized in that** each positioning rib (104) extends substantially vertically downwards along a side edge of the bottom face (86i) of the bottom tongue (86).

19. A connector (36) according to any preceding claim, in combination with claim 11, **characterized in that** each of the side studs (92) comprises a bearing surface (92a) for bearing against the outside cylindrical surface of a second pin (62) of the second size, which bearing surface is complementary to said outside cylindrical wall.

20. A connector (36) according to the preceding claim, **characterized in that** the curvature of a top edge (82s) of the opening (82) in a cheek plate (66) is substantially identical to the curvature of the outside cylindrical wall of a second pin (62) of the second size.

21. A connector (36) according to any preceding claim, **characterized in that** each cheek plate (66) comprises a notch (106) which extends vertically downwards from its top edge and which is complementary to a manipulator element for manipulating the connector (36).

22. A connector (36) according to the preceding claim, **characterized in that** the notch (106) substantially forms an upside-down T-shape in which the bottom edge of the horizontal branch extends vertically above the top face (74s) of the front element (74) of the body (68) of the connector (36).

23. A connector (36) according to the preceding claim, **characterized in that** the ribs (79) extend longitudinally forwards so as to extend to the front end of the front segment (74) of the body (68) of the connector (36).

24. A connector (36) according to any preceding claim, **characterized in that** it comprises a crossmember (108) that interconnects the rear bottom ends of the cheek plates (66).
